# FASCICULE DE BREVET EUROPEEN

(11) **EP 2 985 201 B1**
(45) Date de publication et mention de la délivrance du brevet: **31.05.2017**
(21) Numéro de dépôt: 15177425.4
(22) Date de dépôt: 20.07.2015
(51) Int. Cl.: B60W 30/00, B60W 30/18

(54) **PROCEDE ET DISPOSITIF DE DETERMINATION DU COUPLE DE CONSIGNE A APPLIQUER AUX ROUES D'UN VEHICULE AUTOMOBILE**
VERFAHREN UND VORRICHTUNG ZUR BESTIMMUNG DES SOLLWERT-DREHMOMENTS, DER AUF DIE RÄDER EINES KRAFTFAHRZEUGS ANZUWENDEN IST
METHOD AND DEVICE FOR DETERMINING THE TORQUE SETTING TO BE APPLIED TO THE WHEELS OF A MOTOR VEHICLE

(30) Priorité: 12.08.2014 FR 1457762
(43) Date de publication de la demande: 17.02.2016
(73) Titulaire: PSA Peugeot Citroën Automobiles S.A., 78140 Velizy Villacoublay (FR)
(72) Inventeur: BEAUVILLAIN, Alexis, 91300 Massy (FR)

(56) Documents cités:
- EP-A1- 1 052 135
- DE-A1- 19 753 764
- DE-A1-102004 050 994
- DE-A1-102005 002 265
- DE-A1-102006 012 515
- US-A1- 2012 078 467

## Description

La présente invention se rapporte à un procédé de détermination du couple de consigne à appliquer aux roues d'un véhicule automobile, ainsi qu'à un dispositif associé.

L'invention appartient au domaine des procédés de détermination ou d'interprétation de la volonté du conducteur d'un véhicule automobile.

Le conducteur d'un véhicule automobile dispose généralement d'un levier, tel qu'une pédale d'accélérateur, pour indiquer aux systèmes de commande du véhicule le couple de consigne qu'il souhaite voir appliquer aux roues du véhicule, par l'intermédiaire de la chaîne de traction.

Ainsi, la pédale d'accélérateur est une commande permettant au conducteur d'agir sur la chaîne de traction du véhicule, la course d'enfoncement de la pédale d'accélérateur étant généralement associée à une courbe prédéterminée, ou cartographie, de couple de consigne de la chaîne de traction du véhicule.DE 10 2004 050 994 A1 décrit un procédé de détermination de consigne à appliquer à une train de roues d'un véhicule automobile tel que défini par le préambule de la revendication 1. On connaît par exemple du document US-2010 0152988 un procédé de commande d'un véhicule par l'intermédiaire d'une pédale d'accélérateur. Une première partie de la course d'enfoncement de la pédale d'accélérateur correspond à une demande de décélération ou à un couple de freinage du véhicule, une deuxième partie de la course correspondant à une demande de couple nul et une troisième partie de la course correspond à une demande d'accélération.

La deuxième partie de la course de la pédale d'accélérateur permet par exemple l'activation d'un mode de fonctionnement du véhicule en roue libre (« coasting » en anglais), dans lequel la chaîne de traction est ouverte. Cette partie de la cartographie de la pédale d'accélérateur associée au mode roue libre génère une zone morte en phase d'accélération et par conséquent un « trou » de couple.

Le but de l'invention est de remédier aux inconvénients de l'art antérieur.

Dans ce but, la présente invention propose un procédé de détermination du couple de consigne à appliquer à un train de roues d'un véhicule automobile comportant une pédale d'accélérateur, le procédé comportant des étapes de détermination du couple par une cartographie en fonction de la position de la pédale, cette cartographie comportant :
- une première courbe définissant le couple de consigne lorsque la position de la pédale est comprise entre une position initiale et une première position intermédiaire,
- une deuxième courbe définissant le couple de consigne lorsque la position de la pédale est comprise entre la première position intermédiaire et une position finale,
le couple de consigne étant égal à une constante sur la deuxième courbe lorsque la position de la pédale est comprise entre la première position intermédiaire et une deuxième position intermédiaire,
le procédé étant remarquable en ce que la cartographie comporte en outre une troisième courbe définissant le couple de consigne lorsque la position de la pédale est comprise entre la première position intermédiaire et la position finale, cette troisième courbe étant au-dessus de la deuxième courbe définie précédemment.

Ainsi, l'invention permet d'éviter de générer un couple de consigne constant aux roues du véhicule lors d'une phase d'accélération.

Dans un mode particulier de réalisation, dans une première des étapes de détermination du procédé, lorsque le couple de consigne est défini par la première courbe, si la position de la pédale atteint la première position intermédiaire, alors le couple de consigne est défini, soit par la deuxième courbe, soit par la troisième courbe.

Dans un autre mode particulier de réalisation dans une première des étapes de détermination du procédé, si la position de la pédale atteint la première position intermédiaire, alors :
- le couple de consigne est défini par la troisième courbe si le gradient de la position de la pédale est strictement supérieur à un seuil prédéfini,
- le couple de consigne est défini par la deuxième courbe dans le cas contraire.

Selon une caractéristique particulière, dans une deuxième étape de détermination, lorsque le couple de consigne est défini par la troisième courbe, si le gradient de la position de la pédale est strictement négatif, alors le couple de consigne est défini par la deuxième courbe.

Selon une caractéristique particulière, dans une troisième étape de détermination, lorsque le couple de consigne est défini par la deuxième courbe, si la position de ladite pédale atteint la première position intermédiaire, alors le couple de consigne est défini par la première courbe.

Selon une caractéristique particulière, sur première courbe définie plus haut, le couple de consigne est négatif.

Selon une caractéristique particulière, la constante définie plus haut est nulle.

Ainsi, l'invention permet d'éviter de générer un couple de consigne nul aux roues du véhicule lors d'une phase d'accélération.

Selon une caractéristique particulière, sur la deuxième courbe définie plus haut, le couple de consigne est positif.

L'invention concerne également un dispositif de détermination du couple de consigne à appliquer à un train de roues d'un véhicule automobile comportant une pédale d'accélérateur, ce dispositif comportant des moyens adaptés à mettre en oeuvre un procédé tel que décrit précédemment.

L'invention a également pour objet un véhicule automobile comportant un tel dispositif.

L'invention sera mieux comprise et d'autres aspects et avantages apparaîtront plus clairement à la lecture de la description qui suit de modes particuliers de réalisation, donnés à titre d'exemple nullement limitatifs et en référence aux dessins qui l'accompagnent, dans lesquels :
- la figure 1 présente schématiquement un mode particulier de réalisation d'un véhicule automobile comprenant une chaîne de traction et un dispositif conforme à l'invention ;
- la figure 2 représente une cartographie du couple de consigne de la chaîne de traction du véhicule en fonction de la position de la pédale d'accélérateur ; et
- la figure 3 représente des étapes d'un procédé conforme à l'invention, de détermination du couple de consigne à appliquer à un train de roues du véhicule.

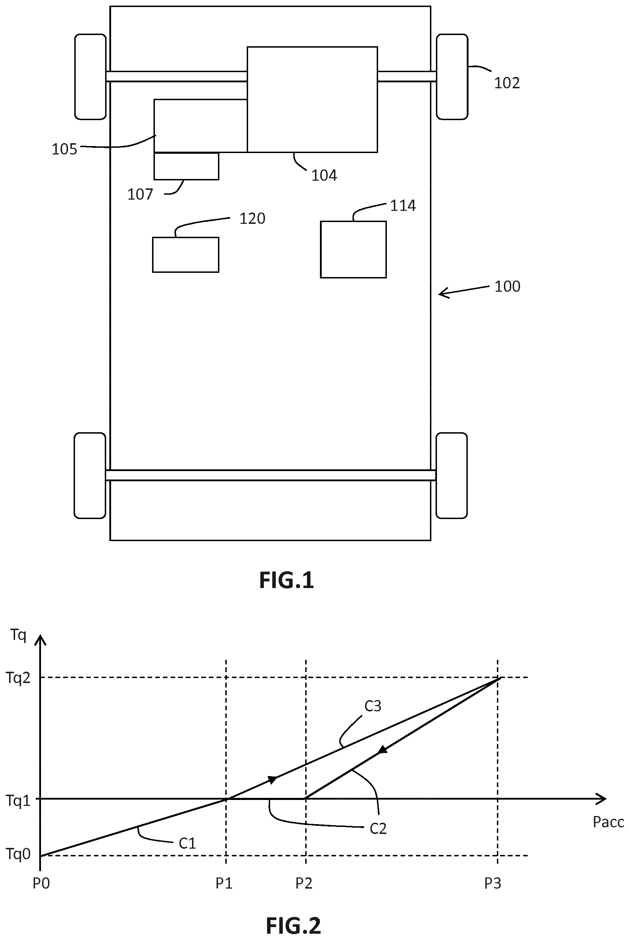

La figure 1 illustre un véhicule automobile 100 comprenant un dispositif 120 de détermination d'un couple à appliquer à un train roues du véhicule 100.

Le dispositif 120 comprend une pédale d'accélérateur (non illustrée) et des moyens pour mettre en oeuvre un procédé, tel que décrit ci-après, de détermination du couple de consigne à appliquer aux roues du véhicule 100.

Le véhicule 100 dispose d'une chaîne de traction comprenant au moins un moteur thermique 105 associé à une transmission 104 pour entraîner un premier train de roues 102 du véhicule 100.

On notera que la transmission 104 peut être automatisée ou non. Par conséquent, il pourra s'agir d'une boîte automatique, d'une boîte de vitesses manuelle pilotée ou non (la boîte de vitesse étant dans ce cas associée à un embrayage piloté ou non), ou d'une boîte de vitesses à double embrayage (ou DCT), ou encore d'une transmission à variation continue (ou CVT).

La chaîne de traction comprend également une machine 107 associée à un dispositif réversible de stockage d'énergie (non illustré), par exemple une batterie électrochimique.

On considère dans ce qui suit, à titre d'exemple non limitatif, que la machine 107 est de type électrique. Mais l'invention n'est pas limitée à ce type de machine. Ainsi, elle concerne également les machines (ou moteurs) hydrauliques ou à air comprimé, dès lors qu'elles permettent de récupérer de l'énergie.

La machine de traction 107 est par exemple liée en rotation au moteur thermique 105 par l'intermédiaire d'une courroie d'une façade accessoire.

Dans l'exemple de la figure 1 la transmission 104 est chargée d'entraîner en rotation les roues du train avant du véhicule 100, mais la transmission 104 peut aussi bien entraîner les roues du train arrière.

Le véhicule 100 comporte un calculateur 114 de gestion de la chaîne de traction. Le calculateur de chaîne de traction 114 permet de piloter l'ouverture et la fermeture de la transmission 104, ainsi que la valeur du couple appliqué par la chaîne de traction au train de roues 102 du véhicule. Ce couple est égal à un couple de consigne Tq qui dépend de la position (ou angle) Pacc de la pédale d'accélérateur.

L'activation d'un mode roue libre consiste à piloter l'ouverture de la chaîne de traction d'un véhicule entre le moteur thermique et les trains de roues du véhicule. Ainsi, dans l'exemple du véhicule 100 représenté sur la figure 1, l'activation du mode roue libre consiste à ouvrir la transmission 104.

Le mode roue libre présente comme intérêt principal de réduire la consommation du véhicule en carburant. Le moteur thermique 105 n'étant plus couplé aux roues, le véhicule 100 n'est plus freiné par les frottements internes et par les pertes par pompage du moteur thermique 105. Pour éviter la consommation de carburant dans ce mode, il est par ailleurs possible de d'arrêter le moteur thermique 105 dans ce mode.

La figure 2 présente sur un graphique des courbes d'évolution d'une cartographie du couple de consigne Tq lorsque la position Pacc de la pédale d'accélérateur évolue entre une position initiale P0 et une position finale P3.

La cartographie du couple de consigne Tq peut également dépendre de la vitesse du véhicule 100. La figure 2 est donc une représentation de cette cartographie pour une vitesse donnée du véhicule.

La position initiale P0 correspond à une position relâchée de la pédale d'accélérateur.

La position finale P3 correspond à une position complètement enfoncée de la pédale d'accélérateur.

Entre la position initiale P0 et une première position intermédiaire P1, le couple de consigne Tq est compris entre des valeurs Tq0 et Tq1 et est défini par une première courbe C1.

Par exemple, la valeur Tq0 est strictement négative, ainsi, le couple Tq est négatif sur la courbe C1 et conducteur peut doser la décélération du véhicule et la récupération d'énergie par la machine 107 lorsque la pédale est entre les positions P0 et P1.

Lorsque la position Pacc est comprise entre la première position intermédiaire P1 et la position finale P3, le couple de consigne est défini par une deuxième courbe C2 ou par une troisième courbe C3.

Sur la deuxième courbe C2, le couple de consigne Tq est constant, égal à Tq1 entre la première position intermédiaire P1 et une deuxième position intermédiaire P2. Entre la deuxième position intermédiaire P2 et la position finale P3, le couple de consigne Tq est positif, compris entre Tq1 et Tq2.

Par exemple, la valeur Tq2 est strictement positive, ainsi le couple Tq est positif sur la courbe C2 et la position Pacc permet alors au conducteur de doser l'accélération du véhicule entre les positions P2 et P3.

Par exemple, la valeur Tq1 est nulle. Ainsi, sur la deuxième courbe C2, entre les positions P1 et P2, le couple de consigne Tq étant nul, le véhicule peut alors fonctionner en mode roue libre.

La troisième courbe C3 est située au-dessus de la deuxième courbe C2. Entre la première position intermédiaire P1 et la position finale P3, le couple de consigne Tq défini par la troisième courbe C3 est compris entre Tq1 et Tq2.

La position P1 peut par exemple se situer entre 0% et 10% d'enfoncement de la pédale d'accélérateur et la position P2 entre 10% et 25% d'enfoncement. Ces valeurs ne sont fournies qu'à titre d'exemple non limitatif et peuvent varier avec la vitesse du véhicule.

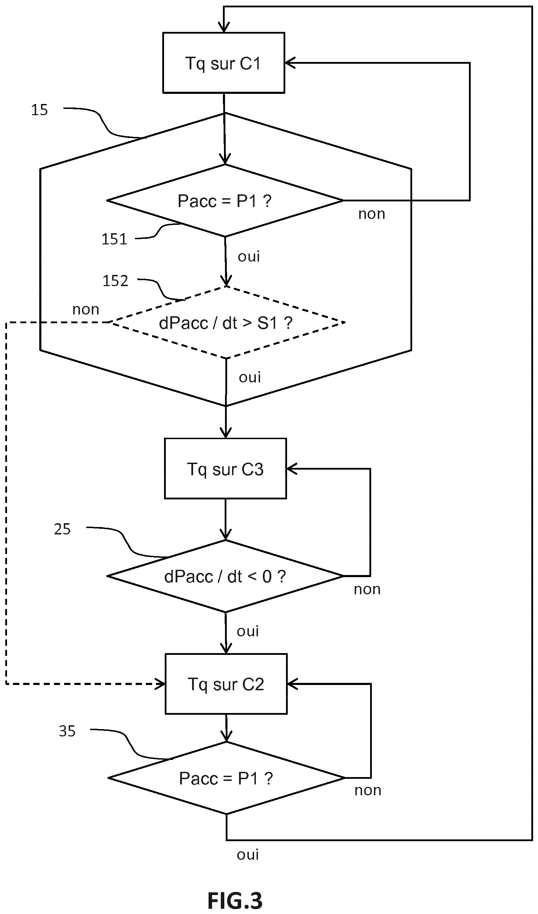

La figure 3 est un logigramme représentant des étapes d'un procédé conforme à l'invention, de détermination du couple de consigne Tq.

Lorsque le couple de consigne Tq est défini par la première courbe C1, une première étape 15 de surveillance de la position Pacc de la pédale d'accélérateur est réalisée.

La première étape 15 comprend au moins une première sous-étape 151 de décision, ainsi que, de façon optionnelle, une deuxième sous-étape de décision 152.

Dans un premier mode particulier de réalisation, la première étape 15 comprend unique la première sous-étape 151 de décision. Dans ce cas, dans la première sous-étape 151, si la position Pacc atteint la première position intermédiaire P1, alors le couple de consigne Tq est défini par la troisième courbe C3, sinon le couple de consigne Tq reste défini par la première courbe C1.

Dans un deuxième mode particulier de réalisation, la première étape 15 comprend aussi la deuxième sous-étape 152 de décision. Dans ce cas :
- dans la première sous-étape 151, si la position Pacc atteint la première position intermédiaire P1, alors on passe à la deuxième sous-étape 152, sinon le couple de consigne Tq reste défini par la première courbe C1 ;
- dans la deuxième sous-étape 152, lorsque la position Pacc atteint la première position intermédiaire P1 (sous-étape 151 validée), si le gradient de la position Pacc (dérivée temporelle de la position Pacc) est supérieur à un seuil S1 prédéfini, alors le couple de consigne Tq est défini par la troisième courbe C3, sinon le couple de consigne Tq est défini par la deuxième courbe C2.

Par exemple le seuil S1 est supérieur à 50% d'enfoncement par seconde.

Lorsque le couple de consigne Tq est défini par la troisième courbe C3, une deuxième étape 25 est effectuée.

Dans la deuxième étape 25, si pédale d'accélérateur est partiellement relâchée, c'est-à-dire si gradient de la position Pacc est strictement négatif (dérivée temporelle de Pacc strictement négative), alors le couple de consigne Tq est défini par la deuxième courbe C2, sinon la position Pacc reste défini par la troisième courbe C3.

Lorsque le couple de consigne Tq est défini par la deuxième courbe C2, une troisième étape 35 est effectuée.

Dans la troisième étape 35, si la position Pacc atteint la première position intermédiaire P1, alors le couple de consigne Tq est à nouveau défini par la première courbe C1, sinon le couple de consigne Tq reste défini par la deuxième courbe C2.

Ainsi, un procédé selon l'invention, sa mise en oeuvre dans un dispositif de détermination du couple de consigne à appliquer à un train de roue d'un véhicule automobile, ou un véhicule comportant un tel dispositif, permet d'éviter de générer une consigne de couple constant aux roues du véhicule lors d'une phase d'accélération.

## Revendications

1. Procédé de détermination du couple de consigne (Tq) à appliquer à un train de roues (102) d'un véhicule automobile (100) comportant une pédale d'accélérateur, ledit procédé comportant des étapes (15, 25, 35) de détermination dudit couple (Tq) par une cartographie en fonction de la position (Pacc) de ladite pédale, ladite cartographie comportant :
- une première courbe (C1) définissant ledit couple (Tq) lorsque la position (Pacc) de ladite pédale est comprise entre une position initiale (P0) et une première position intermédiaire (P1),
- une deuxième courbe (C2) définissant ledit couple (Tq) lorsque la position (Pacc) de ladite pédale est comprise entre ladite première position intermédiaire (P1) et une position finale (P3),
ledit couple (Tq) étant égal à une constante (Tq1) sur ladite deuxième courbe (C2) lorsque la position (Pacc) de ladite pédale est comprise entre ladite première position intermédiaire (P1) et une deuxième position intermédiaire (P2),
ladite cartographie comportant en outre une troisième courbe (C3) définissant ledit couple (Tq) lorsque la position (Pacc) de ladite pédale est comprise entre ladite première position intermédiaire (P1) et ladite position finale (P3), ladite troisième courbe (C3) étant au-dessus de ladite deuxième courbe (C2),
ledit procédé étant **caractérisé en ce que** sur ladite première courbe (C1) ledit couple (Tq) est négatif.

2. Procédé selon la revendication 1, **caractérisé en ce que** dans une première (15) desdites étapes, lorsque ledit couple (Tq) est défini par ladite première courbe (C1), si la position (Pacc) de ladite pédale atteint la première position intermédiaire (P1), alors ledit couple (Tq) est défini, soit par ladite deuxième courbe (C2), soit par ladite troisième courbe (C3).

3. Procédé selon la revendication 1, **caractérisé en ce que** dans une première (15) desdites étapes, si ladite position (Pacc) atteint ladite première position intermédiaire (P1), alors :
- ledit couple (Tq) est défini par ladite troisième courbe (C3) si le gradient de la position (Pacc) de ladite pédale est strictement supérieur à un seuil (S1) prédéfini,
- ledit couple (Tq) est défini par ladite deuxième courbe (C2) dans le cas contraire.

4. Procédé selon la revendication 2 ou 3, **caractérisé en ce que** dans une deuxième étape (25), lorsque ledit couple (Tq) est défini par ladite troisième courbe (C3), si le gradient de la position (Pacc) de ladite pédale est strictement négatif, alors ledit couple (Tq) est défini par ladite deuxième courbe (C2).

5. Procédé selon la revendication 4, **caractérisé en ce que** dans une troisième étape (35), lorsque ledit couple (Tq) est défini par ladite deuxième courbe (C2), si la position (Pacc) de ladite pédale atteint la première position intermédiaire (P1), alors ledit couple (Tq) est défini par ladite première courbe (C1).

6. Procédé selon l'une quelconque des revendications précédentes, **caractérisé en ce que** ladite constante (Tq1) est nulle.

7. Procédé selon l'une quelconque des revendications précédentes, **caractérisé en ce que** sur ladite deuxième courbe (C2) ledit couple (Tq) est positif.

8. Dispositif (120) de détermination du couple de consigne (Tq) à appliquer à un train de roues (102) d'un véhicule automobile (100) comportant une pédale d'accélérateur, **caractérisé en ce qu'**il comporte des moyens adaptés à mettre en oeuvre un procédé selon l'une quelconque des revendications précédentes.

9. Véhicule automobile comportant un train de roues (102) et une pédale d'accélérateur **caractérisé en ce qu'**il comporte au moins un dispositif selon la revendication précédente.

## Patentansprüche

1. Verfahren zum Bestimmen des Solldrehmoments (Tq), das an ein Fahrwerk (102) eines Kraftfahrzeugs (100) anzulegen ist, das ein Gaspedal umfasst, wobei das Verfahren Schritte (15, 25, 35) zum Bestimmen des Drehmoments (Tq) durch eine Kartographie in Abhängigkeit von der Position (Pacc) des Pedals umfasst, wobei die Kartographie Folgendes umfasst:
- eine erste Kurve (C1), die das Drehmoment (Tq) definiert, wenn die Position (Pacc) des Pedals zwischen einer Ausgangsposition (P0) und einer ersten Zwischenposition (P1) liegt,
- eine zweite Kurve (C2), die das Drehmoment (Tq) definiert, wenn die Position (Pacc) des Pedals zwischen der ersten Zwischenposition (P1) und einer Endposition (P3) liegt,
wobei das Drehmoment (Tq) gleich einer Konstante (Tql) auf der zweiten Kurve (C2) ist, wenn die Position (Pacc) des Pedals zwischen der ersten Zwischenposition (P1) und der zweiten Zwischenposition (P2) liegt,
wobei die Kartographie außerdem eine dritte Kurve (C3) umfasst, die das Drehmoment (Tq) definiert, wenn die Position (Pacc) des Pedals zwischen der ersten Zwischenposition (P1) und der Endposition (P3) liegt, wobei die dritte Kurve (C3) oberhalb der zweiten Kurve (C2) liegt,
Verfahren **dadurch gekennzeichnet, dass** das Drehmoment (Tq) auf der ersten Kurve (C1) negativ ist.

2. Verfahren nach Anspruch 1, **dadurch gekennzeichnet, dass** bei einem ersten (15) der Schritte, wenn das Drehmoment (Tq) durch die erste Kurve (C1) definiert ist, falls die Position (Pacc) des Pedals die erste Zwischenposition (P1) erreicht, das Drehmoment (Tq) entweder durch die zweite Kurve (C2) oder durch die dritte Kurve (C3) definiert ist.

3. Verfahren nach Anspruch 1, **dadurch gekennzeichnet, dass**, falls die Position (Pacc) die erste Zwischenposition (P1) in einem ersten (15) der Schritte erreicht:
- das Drehmoment (Tq) durch die dritte Kurve (C3) definiert ist, falls der Gradient der Position (Pacc) des Pedals strikt größer ist als ein vordefinierter Schwellenwert (Sl),
- das Drehmoment (Tq) im gegenteiligen Fall durch die zweite Kurve (C2) definiert ist.

4. Verfahren nach Anspruch 2 oder 3, **dadurch gekennzeichnet, dass** bei dem zweiten Schritt (25), wenn das Drehmoment (Tq) durch die dritte Kurve (C3) definiert ist, falls der Gradient der Position (Pacc) des Pedals strikt negativ ist, das Drehmoment (Tq) durch die zweite Kurve (C2) definiert ist.

5. Verfahren nach Anspruch 4, **dadurch gekennzeichnet, dass** in einem dritten Schritt (35), wenn das Drehmoment (Tq) durch die zweite Kurve (C2) definiert ist, falls die Position (Pacc) des Pedals die erste Zwischenposition (P1) erreicht, das Drehmoment (Tq) durch die erste Kurve (C1) definiert ist.

6. Verfahren nach einem der vorhergehenden Ansprüche, **dadurch gekennzeichnet, dass** die Konstante (Tql) null ist.

7. Verfahren nach einem der vorhergehenden Ansprüche, **dadurch gekennzeichnet, dass** das Drehmoment (Tq) auf der zweiten Kurve (C2) positiv ist.

8. Vorrichtung (120) zum Bestimmen des Solldrehmoments (Tq), das an ein Fahrwerk (102) eines Kraftfahrzeugs (100) anzulegen ist, das ein Gaspedal umfasst, **dadurch gekennzeichnet, dass** sie Mittel umfasst, die angepasst sind, um ein Verfahren nach einem der vorhergehenden Ansprüche umzusetzen.

9. Kraftfahrzeug, das ein Fahrwerk (102) und ein Gaspedal umfasst, **dadurch gekennzeichnet, dass** es mindestens eine Vorrichtung nach dem vorhergehenden Anspruch umfasst.

## Claims

1. A method for determining the torque setting (Tq) to be applied to a wheel set (102) of a motor vehicle (100) comprising an accelerator pedal, said method comprising steps (15, 25, 35) for determining said torque (Tq) by a mapping as a function of the position (Pacc) of said pedal, said mapping comprising:
- a first curve (C1) defining said torque (Tq) when the position (Pacc) of said pedal is comprised between an initial position (P0) and a first intermediate position (P1),
- a second curve (C2) defining said torque (Tq) when the position (Pacc) of said pedal is comprised between said first intermediate position (P1) and a final position (P3),
said torque (Tq) being equal to a constant (Tql) on said second curve (C2) when the position (Pacc) of said pedal is comprised between said first intermediate position (P1) and a second intermediate position (P2),
said mapping further comprising a third curve (C3) defining said torque (Tq) when the position (Pacc) of said pedal is comprised between said first intermediate position (P1) and said final position (P3), said third curve (C3) being above said second curve (C2),
said method being **characterized in that** on said first curve (C1) said torque (Tq) is negative.

2. The method according to claim 1, **characterized in that** in a first (15) of said steps, when said torque (Tq) is defined by said first curve (C1), if the position (Pacc) of said pedal reaches the first intermediate position (P1), then said torque (Tq) is defined either by said second curve (C2), or by said third curve (C3).

3. The method according to claim 1, **characterized in that** in a first (15) of said steps, if said position (Pacc) reaches said first intermediate position (P1), then:
- said torque (Tq) is defined by said third curve (C3) if the gradient of the position (Pacc) of said pedal is strictly greater than a predefined threshold (S1),
- otherwise, said torque (Tq) is defined by said second curve (C2).

4. The method according to claim 2 or 3, **characterized in that** in a second step (25), when said torque (Tq) is defined by said third curve (C3), if the gradient of the position (Pacc) of said pedal is strictly negative, then said torque (Tq) is defined by said second curve (C2).

5. The method according to claim 4, **characterized in that** in a third step (35), when said torque (Tq) is defined by said second curve (C2), if the position (Pacc) of said pedal reaches the first intermediate position (P1), then said torque (Tq) is defined by said first curve (C1).

6. The method according to any one of the preceding claims, **characterized in that** said constant (Tql) is zero.

7. The method according to any one of the preceding claims, **characterized in that** on said second curve (C2) said torque (Tq) is positive.

8. A device (120) for determining the torque setting (Tq) to be applied to a wheel set (102) of a motor vehicle (100) comprising an accelerator pedal, **characterized in that** it comprises means suited to implement a method according to any one of the preceding claims.

9. A motor vehicle comprising a wheel set (102) and an accelerator pedal, **characterized in that** it comprises at least one device according to the preceding claim.
